(19) Europäisches Patentamt / European Patent Office / Office européen des brevets

(11) **EP 2 299 614 B1**

(12) **EUROPÄISCHE PATENTSCHRIFT**

(45) Veröffentlichungstag und Bekanntmachung des Hinweises auf die Patenterteilung:
**15.08.2018  Patentblatt 2018/33**

(51) Int Cl.:
***H04J 3/06*** *(2006.01)*

(21) Anmeldenummer: **10001777.1**

(22) Anmeldetag: **22.02.2010**

(54) **Vorrichtung und Verfahren zur Zeitsynchronisation in einem Kommunikationsnetz**

Device and method for time synchronisation in a communication network

Dispositif et procédé de synchronisation temporelle dans un réseau de communication

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.09.2009  EP 09011892**

(43) Veröffentlichungstag der Anmeldung:
**23.03.2011  Patentblatt 2011/12**

(73) Patentinhaber: **Siemens Aktiengesellschaft 80333 München (DE)**

(72) Erfinder:
• **Na, Chongning**
  **81735 München (DE)**
• **Obradovic, Dragan, Dr.**
  **85521 Ottobrunn (DE)**
• **Scheiterer, Ruxandra, Dr.**
  **82538 Geretsried (DE)**
• **Steindl, Günter**
  **92284 Poppenricht (DE)**
• **Wolfrum, Philipp, Dr.**
  **81539 München (DE)**

(56) Entgegenhaltungen:
DE-A1- 10 241 429        US-A1- 2003 177 154
US-A1- 2004 141 526

• **SCHEITERER R L ET AL: "Synchronization Performance of the Precision Time Protocol in Industrial Automation Networks", IEEE TRANSACTIONS ON INSTRUMENTATION AND MEASUREMENT, IEEE SERVICE CENTER, PISCATAWAY, NJ, US, Bd. 58, Nr. 6, 1. Juni 2009 (2009-06-01), Seiten 1849-1857, XP011255351, ISSN: 0018-9456**

EP 2 299 614 B1

**Beschreibung**

In einer Vielzahl von technischen Gebieten werden Kommunikationsnetze dazu verwendet, dezentral Arbeitsabläufe zu steuern. Insbesondere in industriellen Automatisierungsanlagen ist von besonderer Bedeutung, dass die automatischen Arbeitsvorgänge genau aufeinander abgestimmt sind. Dies wird dadurch erreicht, dass die einzelnen, miteinander kommunizierenden Netzknoten in dem Kommunikationsnetz jeweils interne Uhren aufweisen und zur Synchronisation aller internen Uhren Synchronisationsnachrichten übertragen werden. Die interne Uhr eines jeweiligen Netzknotens arbeitet hierbei mit einer entsprechenden Knotentaktfrequenz, die für die einzelnen Netzknoten gegebenenfalls unterschiedlich sein kann. Die Synchronisation der Uhren erfolgt auf der Basis einer vorgegebenen Referenzuhr (engl. Bezeichnung: "Grandmaster Clock") bzw. deren Referenztaktfrequenz, wobei die Synchronisationsnachrichten in Abhängigkeit von der Referenztaktfrequenz übertragen werden. Dies bedeutet, dass in festen Taktabständen gemäß der Referenztaktfrequenz Synchronisationsnachrichten übermittelt werden. Die einzelnen, im Kommunikationsnetz übertragenen Synchronisationsnachrichten enthalten den Taktzählzustand der Referenzuhr. Jeder Netzknoten aktualisiert diesen Taktzählzustand für den eigenen Bedarf, indem er die Anzahl an Takten der Referenzuhr zwischen Aussenden der Synchronisationsnachricht beim vorhergehenden Netzknoten und Empfangen der Synchronisationsnachricht beim jeweiligen Netzknoten abschätzt (engl. Bezeichnung "line delay"). Außerdem aktualisiert jeder Netzknoten diesen Taktzählzustand für den nächsten Knoten, indem er auch die Anzahl an Takten der Referenzuhr zwischen seinem Empfangen der Synchronisationsnachricht und seinem Aussenden der Synchronisationsnachricht abschätzt (engl. Bezeichnung "bridge delay"). Diese Abschätzung erfolgt u. a. üblicherweise dadurch, dass das Taktverhältnis (im Englischen auch als "Rate Compensation Factor" RCF bezeichnet) zwischen der Referenztaktfrequenz und der Knotentaktfrequenz des jeweiligen Netzknotens abgeschätzt wird. Mit dem abgeschätzten Taktverhältnis kann dann für jede gewünschte Zeitspanne eine Umrechnung der Anzahl an Takten der Knotentaktfrequenz in die entsprechende Anzahl der Referenztaktfrequenz durchgeführt werden. Zum Beispiel kann damit eine Umrechnung der Zeitspanne zwischen Aussenden einer Synchronisationsnachricht beim vorhergehenden Netzknoten und Aussenden der Synchronisationsnachricht beim jeweiligen Netzknoten, gemessen in Takten der Knotentaktfrequenz, in die Takte der Referenztaktfrequenz durchgeführt werden. Die sich daraus ergebende Anzahl an Takten wird dann zu den Takten der empfangenen Synchronisationsnachricht hinzuaddiert und eine entsprechend aktualisierte Synchronisationsnachricht wird von dem entsprechenden Netzknoten wieder ausgesendet.

Aus dem Stand der Technik ist im Bereich der industriellen Automatisierungstechnik der Standard IEC 61158 Type 10 bekannt, genannt PROFINET, bei dem es sich um ein Ethernet handelt, welches industriellen Vorgaben genügt. Dieser PROFINET Standard arbeitet nach dem oben dargelegten Prinzip, wonach in den Netzknoten die Taktzählzustände in den Synchronisationsnachrichten aktualisiert werden. Auf PROFINET basierte Systeme verwenden zur Synchronisation der internen Uhren der Netzknoten üblicherweise das Precision Transparent Clock Protocol (PTCP) gemäß IEC 61158 Type 10 PTCP, welches auch im Standard IEEE 1588 V2 als Profil referenziert wird.

Dieses aktualisiert nach dem oben dargelegten Prinzip die Taktzählzustände der Synchronisationsnachrichten. Gemäß diesem Standard werden aufeinanderfolgend Synchronisationsnachrichten von einem Netzknoten zum nächsten in einer logischen Reihe oder Baumstruktur übertragen. Die Synchronisationsnachrichten stammen von einem Referenzknoten bzw. Masterelement, welches das erste Element in der Reihe bzw. in der Baumstruktur ist. Die Synchronisationsnachrichten enthalten ursprünglich einen Zeitstempel des Zählers einer Referenzuhr in dem Referenzknoten, wenn eine Synchronisationsnachricht übertragen wurde. Die Netzknoten in der Reihe bzw. Baumstruktur, auch genannt Slaves, verarbeiten diese Information und senden sie weiter. Ein Netzknoten fügt hierbei alle abgeschätzten Zeitverzögerungen zwischen dem Aussenden einer Synchronisationsnachricht vom vorhergehenden Netzknoten und seinem eigenen Aussenden der Synchronisationsnachricht als Inhalt der Synchronisationsnachricht hinzu.

Eine konkrete Implementierung ist beschrieben in R. Lupas Scheiterer, C. Na, D. Obradovic und G. Steindl: "Synchronization Performance of the Precision Time Protocol in Industrial Automation Networks", ISPCS07 Special Issue of the IEEE Transactions on Instrumentation and Measurement, June 2009, Volume 58, Issue 6, pp. 1849-1857.

Aus der EP 2034642 A1 ist ein Verfahren zur Übertragung von Synchronisationsnachrichten in einem Kommunikationsnetz bekannt, wobei das Kommunikationsnetz eine Vielzahl von miteinander kommunizierenden Netzknoten umfasst, welche jeweils eine interne Uhr beinhalten, die mit einer dem jeweiligen Netzknoten zugeordneten Knotentaktfrequenz getaktet ist. Die in dem Kommunikationsnetz übermittelten Synchronisationsnachrichten dienen zur Zeitsynchronisation der internen Uhren der Netzknoten und beinhalten den Taktzählzustand (bzw. nach dem ersten Slave den abgeschätzten Taktzählzustand) einer Referenzuhr, die in einer vorgegebenen Referenztaktfrequenz arbeitet. Der Taktzählzustand wird von jedem Netzknoten abgeschätzt und in der Synchronisationsnachricht aktualisiert. Bei der Abschätzung des Taktzählzustandes werden Veränderungen in der Referenztaktfrequenz berücksichtigt. Eine genaue Bestimmung des Taktzählzustands wird mit Hilfe einer Approximation der zeitlichen Veränderung des Taktverhältnisses zwischen Referenztaktfrequenz und Knotentaktfrequenz durch eine Funktion erreicht, wodurch das Taktverhältnis beim Aussenden einer neuen Synchronisationsnachricht vorhergesagt werden kann und auf der Basis des vorhergesagten Taktverhältnisses ein präziser aktueller Taktzählzustand ermittelbar ist.

US 2003/177154 A1 schlägt eine Zeitsynchronisierung verteilter Systeme vor. Eine Station sendet periodisch Synchronisierungsnachrichten aus, die von den anderen Stationen empfangen werden. Ein Gangunterschied zwischen einer Uhr der sendenden und einer Uhr einer empfangenden Station kann von letzterer auf der Basis des Inhalts der Synchronisierungsnachricht und der Uhrzeit der lokalen Uhr bestimmt werden.

Bei den aus dem Stand der Technik bekannten Verfahren wird in jedem Netzknoten ein geschätzter Referenzuhr-Taktzählzustand ermittelt, welcher eine Schätzung eines Taktzählzustands der Referenzuhr darstellt. Der geschätzte Referenzuhr-Taktzählzustand ist jedoch mit einem Rauschen überlagert und hat keinen stetigen Verlauf über der Zeit, da er bei jedem Erhalt einer Synchronisationsnachricht neu berechnet wird. Bei den in der Praxis gegebenen Anforderungen an die Genauigkeit (typischerweise eine Mikrosekunde) des geschätzten Referenzuhr-Taktzählzustands ist daher die Anzahl der Netzknoten, die in die Zeitsynchronisation einbezogen werden können, eng limitiert.

Aufgabe der Erfindung ist es deshalb, eine Vorrichtung und ein Verfahren zur Zeitsynchronisation in einem Kommunikationsnetz zu schaffen, mit denen die Schätzung des Taktzählzustands der Referenzuhr weiter verbessert wird bzw. mit dem bei vorgegebener Genauigkeit eine größere Anzahl an Netzknoten in die Zeitsynchronisation einbezogen werden können.

Diese Aufgabe wird durch die unabhängigen Patentansprüche gelöst. Weiterbildungen der Erfindung sind in den abhängigen Patentansprüchen definiert.

Bei der Vorrichtung zur Zeitsynchronisation in einem Kommunikationsnetz umfasst das Kommunikationsnetz eine Vielzahl von miteinander kommunizierenden Netzknoten, welche jeweils eine interne Uhr beinhalten. Die Netzknoten sind zur Zeitsynchronisation ihrer internen Uhren mittels einer Referenzuhr eines Referenzknotens eingerichtet. Mindestens ein Netzknoten ist zur Ermittlung eines geschätzten Referenzuhr-Taktzählzustands eingerichtet, welcher eine Schätzung eines Referenzuhr-Taktzählzustands der Referenzuhr darstellt. Die Vorrichtung ist dadurch gekennzeichnet, dass sie im Netzknoten enthalten ist und einen PI-Regler umfasst. Weiterhin ist die Vorrichtung zur Ermittlung eines geregelten Taktzählzustands mit Hilfe des Reglers eingerichtet, wobei der geregelte Taktzählzustand eine Schätzung des Referenzuhr-Taktzählzustands darstellt und einen stetigen Verlauf aufweist.

Bei dem Verfahren zur Zeitsynchronisation in einem Kommunikationsnetz umfasst das Kommunikationsnetz eine Vielzahl von miteinander kommunizierenden Netzknoten. Die Netzknoten beinhalten jeweils eine interne Uhr. Die Zeitsynchronisation der internen Uhren der Netzknoten erfolgt mittels einer Referenzuhr eines Referenzknotens. Mindestens ein Referenzknoten ermittelt einen geschätzten Referenzuhr-Taktzählzustand, welcher eine Schätzung eines Referenzuhr-Taktzählzustands der Referenzuhr darstellt.

Das Verfahren ist dadurch gekennzeichnet, dass zumindest der eine Netzknoten mit Hilfe eines PI-Reglers einen geregelten Taktzählzustand ermittelt, welcher eine Schätzung des Referenzuhr-Taktzählzustands darstellt und einen stetigen Verlauf aufweist.

Neben dem soeben beschriebenen Verfahren und der Vorrichtung umfasst die Erfindung ferner einen computerlesbaren Datenträger, auf dem ein Computerprogramm gespeichert ist, welches das soeben beschriebene Verfahren ausführt, wenn es in einem Mikroprozessor abgearbeitet wird.

Weiterhin umfasst die Erfindung ein Computerprogramm, das in einem Mikroprozessor abgearbeitet wird und dabei das zuvor beschriebene Verfahren ausführt.

Durch das (gegebenenfalls computerimplementierte) Verfahren und die Vorrichtung wird der zuvor ermittelte geschätzte Re ferenzuhr-Taktzählzustand in jedem Netzknoten mit Hilfe eines Reglers nachbearbeitet. Dies hat den Vorteil, dass der Regler das Rauschen über dem geschätzten Referenzuhr-Taktzählzustand verringert und mit dem geregelten Taktzählzustand eine kontinuierliche synchronisierte Zeit (mit stetigem Verlauf) für jeden Netzknoten bereitstellt, wie es für typische industrielle Anforderungen erforderlich ist. Durch den Einsatz des

Reglers kann daher bei vorgegebener Genauigkeit für die Zeitsynchronisation eine größere Anzahl von Netzknoten einbezogen werden.

Es wird somit für den eigenen Bedarf jedes Netzknotens (nicht aber für das Weiterleiten zum nächsten Netzknoten) nicht mehr der geschätzte Referenzuhr-Taktzählzustand als Schätzung des Referenzuhr-Taktzählzustands verwendet, sondern vielmehr der geregelte Taktzählzustand, welcher durch eine Verfolgung des geschätzten Referenzuhr-Taktzählzustands mit dem Regler ermittelt wird. Somit werden die Sprünge des geschätzten Referenzuhr-Taktzählzustands bei Neuberechnung nach Erhalt einer Synchronisationsnachricht, welche in vielen industriellen Anwendungen nicht tolerierbar sind, in den stetigen Verlauf des geregelten Taktzählzustands umgewandelt. Störungen von zeitabhängigen Prozessen werden somit reduziert. Darüber hinaus weist der geregelte Taktzählzustand im Mittel eine geringere Abweichung vom Referenzuhr-Taktzählzustand auf als der geschätzte Referenzuhr-Taktzählzustand.

Ausführungsbeispiele der Erfindung werden nachfolgend anhand der beigefügten Figuren detailliert beschrieben.

Es zeigen:

Fig. 1 eine schematische Darstellung einer Mehrzahl von Netzknoten in einem Kommunikationsnetz, zwischen denen Synchronisationsnachrichten übermittelt werden (Stand der Technik);

Fig. 2    einen Regelkreis zur Zeitsynchronisation in einem Kommunikationsnetz;

Fig. 3    ein Diagramm mit einer Gegenüberstellung von geschätztem Referenzuhr-Taktzählzustand und geregeltem Taktzählzustand gemäß einer ersten Variante; und

Fig. 4    ein Diagramm mit einer Gegenüberstellung von geschätztem Referenzuhr-Taktzählzustand und geregeltem Taktzählzustand gemäß einer zweiten Variante.

Das erfindungsgemäße Verfahren wird vorzugsweise in einer industriellen Automatisierungsanlage eingesetzt, bei der verteilte Komponenten der Anlage miteinander kommunizieren, um Fertigungsabläufe, z.B. bei der Automobilherstellung, zu steuern. Hierzu kommunizieren die einzelnen Komponenten über ein Kommunikationsnetz drahtlos und/oder drahtgebunden miteinander. Die Komponenten stellen somit Netzknoten des Kommunikationsnetzes dar.

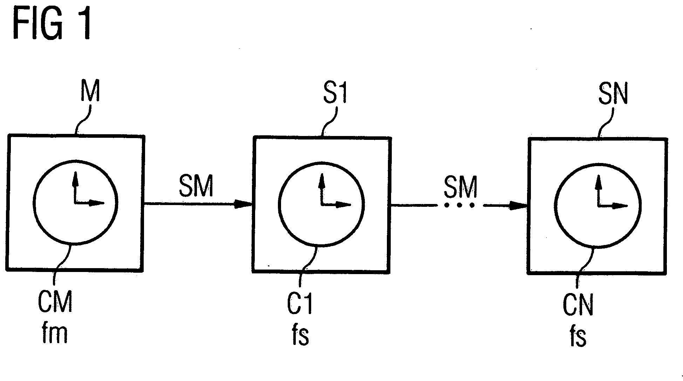

In Fig. 1 sind Netzknoten S1 bis SN (gebräuchlicher Fachbegriff: Slaves) gezeigt, wobei jeder Netzknoten S1 bis SN über eine entsprechende interne Uhr C1, ..., CN verfügt. Jede dieser Uhren arbeitet in einer vorgegebenen Knotentaktfrequenz fs (Slave-Taktfrequenz), welche für unterschiedliche Netzknoten S1 bis SN gegebenenfalls unterschiedlich sein kann. Darüber hinaus ist in dem Kommunikationsnetz der Fig. 1 ein Referenzknoten M (gebräuchlicher Fachbegriff: Master) vorgesehen, welcher über eine Referenzuhr CM verfügt, welche eine Referenztaktfrequenz fm vorgibt, auf die alle internen Uhren C1, ..., CN der Netzknoten S1 bis SN abgestimmt werden sollen. Um dies zu erreichen, werden Synchronisationsnachrichten SM in konstanten, eine vorgegebene Anzahl von Takten der Referenzuhr CM umfassenden Intervallen vom Referenzknoten M ausgesendet. Jede dieser Synchronisationsnachrichten SM enthält hierbei einen Taktzählzustand der Referenzuhr CM, d.h. die im Betrieb des Verfahrens bereits abgelaufenen Takte der Referenzuhr CM. Dieser Taktzählzustand wird dabei mit jeder Synchronisationsnachricht SM übermittelt.

Der Referenzknoten M und die einzelnen Netzknoten S1 bis SN kommunizieren in einer Reihe miteinander, wobei Synchronisationsnachrichten vom Referenzknoten M an den Netzknoten S1 und von diesem an den Netzknoten S2 usw. bis zum Netzknoten SN übermittelt werden. Um eine exakte Zeitsynchronisation in den einzelnen Netzknoten S1 bis SN zu erreichen, muss der Taktzählzustand in den Synchronisationsnachrichten SM in den einzelnen Netzknoten S1 bis SN aktualisiert werden. Deshalb ist in jedem Netzknoten S1 bis SN eine Zeitverzögerung bekannt, die zwischen dem Aussenden einer Synchronisationsnachricht SM vom vorhergehenden Netzknoten S1 bis SN (bzw. vom Referenzknoten M) bis zum Aussenden der Synchronisationsnachricht SM vom jeweiligen Netzknoten S1 bis SN zum nächsten Netzknoten S1 bis SN benötigt wird. Diese Zeitverzögerung setzt sich aus zwei Zeitspannen LDi und BDi (i = 1, ..., N) zusammen, wobei diese Zeitspannen für jeden Netzknoten S1 bis SN unterschiedlich sein kann. LDi ist hierbei die Zeitspanne, welche zur Übermittlung der Nachricht vom vorhergehenden Netzknoten Si-1 zum jeweiligen Netzknoten Si benötigt wird (LD = Line Delay). BDi ist eine Verarbeitungszeit, welche im Netzknoten Si zum Verarbeiten einer empfangenen Synchronisationsnachricht bis zum Aussenden der Synchronisationsnachricht zum nächsten Netzknoten benötigt wird (BD = Bridge Delay). Diese Verzögerungszeit wird in dem jeweiligen Netzknoten S1 bis SN in Takten gemäß der Knotentaktfrequenz fs angegeben. Der Ablauf der Synchronisation der internen Uhren ist hierbei dem Fachmann hinlänglich bekannt und wird deshalb nicht im Detail erläutert.

Die nun folgenden Ausführungsbeispiele der Erfindung gehen von dem in Fig. 1 gezeigten Kommunikationsnetz aus, welches die miteinander kommunizierenden Netzknoten S1 bis SN umfasst, welche jeweils die interne Uhr C1 bis CN beinhalten, und wobei die Netzknoten S1 bis SN zur Zeitsynchronisation ihrer internen Uhren C1 bis CN mittels der Referenzuhr CM des Referenzknotens M eingerichtet sind.

Mindestens ein Netzknoten S1 bzw. ggf. auch alle Netzknoten S1 bis SN sind mit den aus dem Stand der Technik bekannten Verfahren zur Ermittlung eines geschätzten Referenzuhr-Taktzählzustands RMT eingerichtet, welcher eine Schätzung eines Referenzuhr-Taktzählzustands CMT der Referenzuhr CM darstellt.

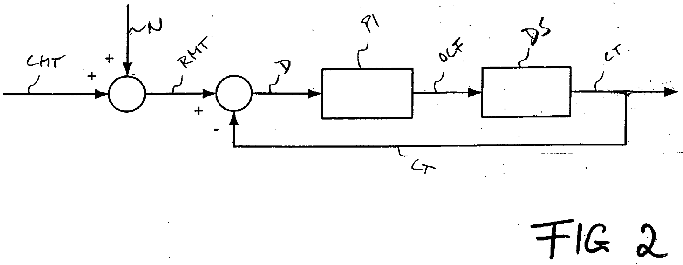

Fig. 2 zeigt nun einen Regelkreis zur Zeitsynchronisation in einem Kommunikationsnetz. Der Regelkreis ist hierbei eine schematische Darstellung einer Regelung, die in dem mindestens einen der Netzknoten S1 bis SN bzw. ggf. auch in allen Netzknoten S1 bis SN durchgeführt wird. Als Führungsgröße, d.h. als Sollwert der Regelung, wird dem Regelkreis der zuvor ermittelte geschätzte Referenzuhr-Taktzählzustand RMT zugeführt. Wie oben beschrieben und wie in Fig. 2 dargestellt, handelt es sich bei dem geschätzten Referenzuhr-Taktzählzustand RMT nur um eine Schätzung des Referenzuhr-Taktzählzustands CMT, da der Referenzuhr-Taktzählzustand CMT nur unter Einfluss einer Störung N an den jeweiligen Netzknoten übermittelt werden kann.

Eine Regelabweichung D zwischen dem geschätzten Referenzuhr-Taktzählzustand RMT und einem geregelten Taktzählzustand CT wird einem Regler PI als Regelabweichung und Eingangssignal zugeführt. Der geregelte Taktzählzustand CT ist hierbei die Regelgröße des Regelkreises und dient für den jeweiligen Netzknoten als virtuelle Uhr, welche sowohl gegenüber der internen Uhr des Netzknotens als auch gegenüber dem geschätzten Referenzuhr-Taktzählzustand RMT verbesserte Eigenschaften aufweist. Der Regler PI hat die Aufgabe, den geregelten Taktzählzustand CT als Regelgröße nach Möglichkeit auf dem geschätzten Referenzuhr-Taktzählzustand als Führungsgröße zu halten. Hierzu gibt der Regler PI als Stellgröße und Ausgangssignal einen Regelabweichung-Kompensationsfaktor OCF an die Regelstrecke, in Fig. 2 ein dynamisches System DS, weiter. Bei dem dynamischen System DS handelt es sich hierbei um eine virtuelle Uhr mit dem geregelten Taktzählzustand CT, der berechnet wird, indem der internen Uhr des Netzknotens gefolgt wird, wobei deren Taktzählzustand mit dem Regelabweichung-Kompensationsfaktor OCF fortlaufend korrigiert wird. Die entsprechende Formel ist weiter unten angegeben.

Die Regelabweichung D ist hierbei definiert als:

$$\texttt{offset(t)} = \texttt{RMT(t)} - \texttt{CT(t)}.$$

Als Regler PI eignet sich ein stetiger, linearer Regler, insbesondere ein PI-Regler oder ein PID-Regler. Hierdurch wird sichergestellt, dass der geregelte Taktzählzustand CT einen stetigen Verlauf aufweist.

Der Regelabweichung-Kompensationsfaktor OCF schätzt ein aktuelles Verhältnis einer Referenztaktfrequenz fm der Referenzuhr CM zu einer Knotentaktfrequenz fs der internen Uhr des Netzknotens. Der Regelabweichung-Kompensationsfaktor OCF wird beispielsweise gemäß dem zeitdiskreten Regelgesetz mithilfe der folgenden Formel berechnet:

$$\texttt{OCF}_n^i = \texttt{OCF}_n^{i-1} + k_p\left(\texttt{offset}_n^i - \texttt{offset}_n^{i-1}\right) + k_i\,\texttt{offset}_n^{i-1}\left(t(i) - t(i-1)\right)$$

Dies ist eine direkte Diskretisierung des bekannten kontinuierlichen PI-Reglers. Auch andere Regler mit Integralanteil wären geeignet.

Hierbei gilt $\texttt{offset}_n^i = \texttt{RMT}_n^i - \texttt{CT}_n^i$. $\texttt{offset}_n^i$ bezeichnet hierbei die Regelabweichung des Netzknotens n zum Zeitpunkt t(i). $\texttt{RMT}_n^i$ bezeichnet den durch den Netzknoten n zum Zeitpunkt t(i) geschätzten Referenzuhr-Taktzählzustand RMT. $\texttt{CT}_n^i$ bezeichnet den durch den Netzknoten n zum Zeitpunkt t(i) ermittelten geregelten Taktzählzustand CT. $\texttt{OCF}_n^i$ bezeichnet den Regelabweichung-Kompensationsfaktor OCF des Netzknotens n zum Zeitpunkt t(i). $k_p$ bezeichnet den Proportionalbeiwert bzw. den Proportionalfaktor und $k_i$ den Integrierbeiwert des PI-Reglers.

Der Regelabweichung-Kompensationsfaktor OCF ist somit ein Maß des durch den Regler PI geschätzten zeitabhängigen Verhältnisses zwischen der Referenztaktfrequenz fm und der Knotentaktfrequenz fs. Der geregelte Taktzählzustand CT wird berechnet, indem der internen Uhr des Netzknotens gefolgt wird, wobei deren Taktzählzustand mit dem Regelabweichung-Kompensationsfaktor OCF fortlaufend korrigiert wird:

$$\texttt{CT}_n^i = \texttt{CT}_n^{i-1} + \texttt{OCF}_n^{i-1}\left(\texttt{S}_n^i - \texttt{S}_n^{i-1}\right).$$

$\texttt{S}_n^i$ ist hierbei der Taktzählzustand der internen Uhr des Netzknotens n zum Zeitpunkt t(i).

Die Berechnung des geregelten Taktzählzustands CT kann in beliebig kleinen Zeitintervallen erfolgen, wodurch der geregelte Taktzählzustand CT zu einer zeitstetigen Funktion wird. Da der Regelkreis in Fig. 2 keinen direkten Einfluss des geschätzten Referenzuhr-Taktzählzustands RMT auf den geregelten Taktzählzustand CT vorsieht, resultieren Sprünge im geschätzten Referenzuhr-Taktzählzustand RMT nicht in Sprüngen des geregelten Taktzählzustands CT. Daher stellt der geregelte Taktzählzustand CT eine gleichmäßige, kontinuierliche, virtuelle Uhr bereit, welche für zeitkritische Anwendungen verwendet werden kann.

Versuche haben gezeigt, dass der geregelte Taktzählzustand CT gegenüber dem geschätzten Referenzuhr-Taktzählzustands RMT eine verbesserte Schätzung des Referenzuhr-Taktzählzustands CMT darstellt, besonders bei steigenden Abständen des jeweiligen Netzknotens zum Referenzknoten. In einem beispielhaft betrachteten Netzwerk mit 160 Netzknoten, welche in einer Reihentopologie angeordnet wurden, konnte eine Reduktion der maximalen Fehler um 18-35% beobachtet werden.

Somit wird der Regler PI verwendet, um den Regelabweichung-Kompensationsfaktor OCF zu berechnen, welcher wiederum als Steigung für den geregelten Taktzählzustand CT herangezogen wird. So wird sichergestellt, dass der geregelte Taktzählzustand CT dem geschätzten Referenzuhr-Taktzählzustands RMT folgt, ohne dessen Sprünge abzubilden.

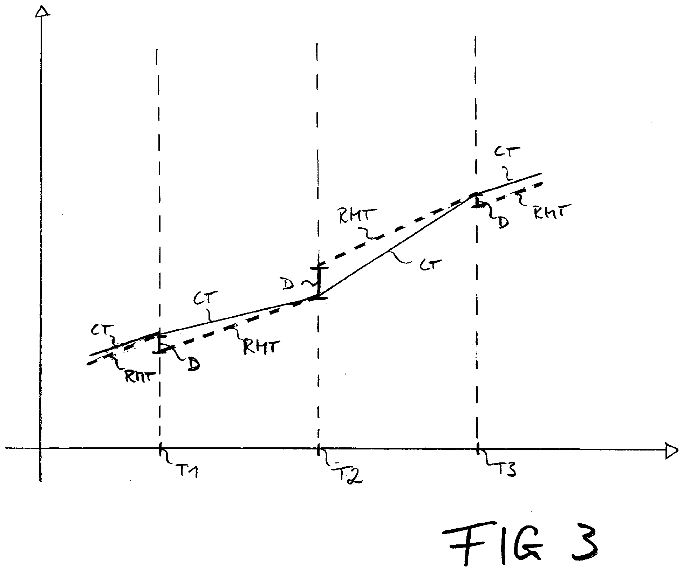

Fig. 3 zeigt ein Diagramm mit einer Gegenüberstellung von geschätztem Referenzuhr-Taktzählzustand RMT und dem geregelten Taktzählzustand CT gemäß einer ersten Variante. Entlang der Abszisse ist eine absolute Zeit mit Zeitpunkten T1, T2 und T3 wiedergegeben. Entlang der Ordinate ist der jeweilige geschätzte Referenzuhr-Taktzählzustand RMT bzw. der jeweilige geregelte Taktzählzustand CT aufgetragen. Die Linien für den geschätzten Referenzuhr-Taktzählzustand RMT sind gestrichelt dargestellt, da der geschätzte Referenzuhr-Taktzählzustand RMT nur zu den Zeitpunkten T1, T2 und T3 berechnet wird. Die gestrichelten Linien zeigen eine mögliche lineare Extrapolation des geschätzten Referenzuhr-Taktzählzustands RMT. Der Regler PI wird im Ausführungsbeispiel gemäß Fig. 3 jeweils zu den Zeitpunkten T1, T2 und T3 ausgeführt. Der Regler PI ist hierbei so eingestellt, dass die geregelte Zeit CT jeweils bis zum nächsten Zeitpunkt der Ausführung des Reglers kontinuierlich an den extrapolierten geschätzten Referenzuhr-Taktzählzustand RMT angenähert wird. Da der geschätzte Referenzuhr-Taktzählzustand RMT zu den Zeitpunkten T1, T2 und T3 jeweils neu berechnet wird, beispielsweise auf Grundlage neu eingetroffener Synchronisationsnachrichten SM, ergeben sich zu den Zeitpunkten T1, T2 und T3 jeweils Sprünge gegenüber dem extrapolierten zeitlichen Verlauf des geschätzten Referenzuhr-Taktzählzustands RMT, da die Berechnung des geschätzten Referenzuhr-Taktzählzustands RMT durch die in Fig. 2 gezeigte Störung N gestört wird. Aus der Differenz zwischen dem geregelten Taktzählzustand CT und dem neu berechneten geschätzten Referenzuhr-Taktzählzustand RMT ergibt sich eine Regelabweichung D, welche in Fig. 3 jeweils zu den Zeitpunkten T1, T2 und T3 grafisch dargestellt ist. Die Regelabweichung D wird dem Regler PI als Eingangssignal zugeführt. Der Regler PI stellt anschließend sicher, dass der geregelte Taktzählzustand CT erneut den extrapolierten geschätzten Referenzuhr-Taktzählzustand RMT annähert, wie in Fig. 3 gezeigt. Von besonderer Bedeutung ist hierbei, dass der geregelte Taktzählzustand CT in Fig. 3 einen stetigen Verlauf aufweist. Im Gegensatz zum geschätzten Referenzuhr-Taktzählzustand RMT weist der geregelte Taktzählzustand CT keine Sprünge auf. Dieser kontinuierliche Verlauf ist insbesondere für zeitkritische Anwendungen von Vorteil.

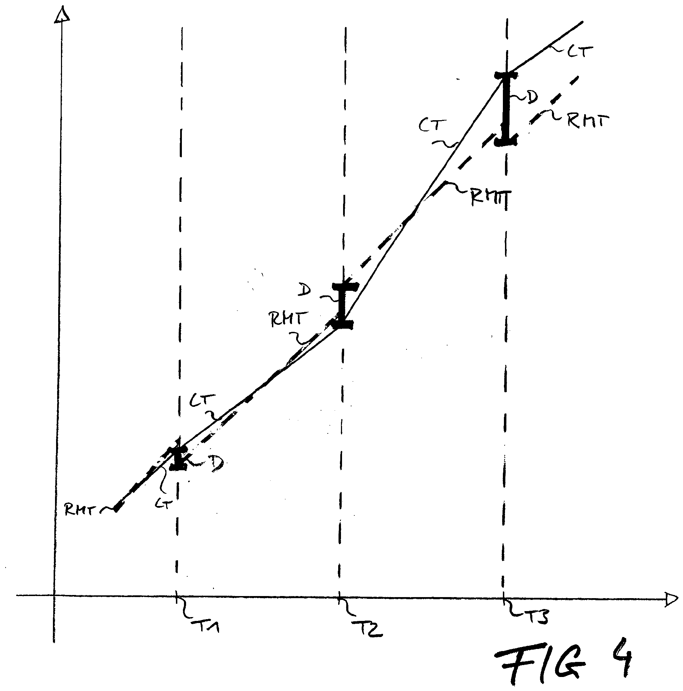

Fig. 4 zeigt entlang der Abszisse erneut eine absolute Zeit mit den Zeitpunkten T1, T2 und T3. Entlang der Ordinate sind erneut der geschätzte Referenzuhr-Taktzählzustand RMT sowie der geregelte Taktzählzustand CT aufgetragen. Die Linien für den geschätzten Referenzuhr-Taktzählzustand RMT sind erneut gestrichelt dargestellt, da der geschätzte Referenzuhr-Taktzählzustand RMT nur zu den Zeitpunkten T1, T2 und T3 berechnet wird. Die gestrichelten Linien zeigen auch hier nur eine mögliche lineare Extrapolation des geschätzten Referenzuhr-Taktzählzustands RMT. In dem in Fig. 4 gezeigten zu Fig. 3 alternativen Ausführungsbeispiel wird der Regler PI ebenfalls zu den Zeitpunkten T1, T2 und T3 ausgeführt. Der Regler PI ist hierbei jedoch so eingestellt, dass der geregelte Taktzählzustand CT den extrapolierten geschätzten Referenzuhr-Taktzählzustand RMT bereits nach einem halben Zeitintervall zwischen den Zeitpunkten T1, T2 und T3 für die Ausführung des Reglers PI annähert. Der Regler PI kann auch beliebig anders eingestellt werden, beispielsweise auf eine Annäherung nach 75% oder 150% des Zeitintervalls zwischen den Zeitpunkten T1, T2 und T3. Zum Zeitpunkt T1 ist der geregelte Taktzählzustand CT etwas niedriger als der extrapolierte bisherige geschätzte Referenzuhr-Taktzählzustand RMT. Der zum Zeitpunkt T1 neu berechnete geschätzte Referenzuhr-Taktzählzustand RMT fällt jedoch noch niedriger aus, so dass sich eine Regelabweichung D ergibt. Die Regelabweichung D zwischen dem geregelten Taktzählzustand CT und dem neu berechneten geschätzten Referenzuhr-Taktzählzustand RMT wird dem Regler PI zugeführt. An den Zeitpunkten T2 und T3 wird analog verfahren.

Der Regler PI kann beispielsweise auf einer Netzwerkkarte, z. B. einer Netzwerkkarte mit eigener Echtzeit-Uhr und Zeitstempel-Einheit, angeordnet sein. Der Regler PI kann hierbei in Hardware, aber auch in Software implementiert werden. Eine Ausführung der Echtzeit-Uhr und der Zeitstempel-Einheit in Hardware ist wegen der hohen Anforderungen an zeitliche Genauigkeit von Vorteil. Alternativ zu der Echtzeit-Uhr auf der Netzwerkkarte kann auch auf eine System-Uhr des Netzknotens zugegriffen werden.

In einer Weiterbildung der beschriebenen Ausführungsbeispiele erfolgt die Zeitsynchronisation nach dem Standard IEC 61158 Type 10, genannt PROFINET, und alternativ oder ergänzend nach dem Precision Transparent Clock Protocol (PTCP) gemäß IEC 61158 Type 10 PTCP, welches auch im Standard IEEE 1588 V2 als Profil referenziert wird. Hierbei dient der Referenzknoten M als Master, während die Netzknoten S1-SN als Slaves gemäß den jeweiligen Standards verwendet werden. Als Kommunikationsnetz eignet sich hier ein Multicast-Netzwerk, beispielsweise ein Ethernet.

**Patentansprüche**

1.    Vorrichtung zur Zeitsynchronisation in einem Kommunikationsnetz, wobei das Kommunikationsnetz eine Vielzahl von miteinander kommunizierenden Netzknoten (S1,..., SN) umfasst, welche jeweils eine interne Uhr (C1, ..., CN) beinhalten, wobei die Netzknoten (S1, ..., SN) zur Zeitsynchronisation ihrer internen Uhren (C1, ..., CN) mittels einer Referenzuhr (CM) eines Referenzknotens (M) eingerichtet sind, und wobei mindestens ein Netzknoten (S1) zur Ermittlung eines geschätzten Referenzuhr-Taktzählzustands (RMT) eingerichtet ist, welcher eine Schätzung eines Referenzuhr-Taktzählzustands (CMT) der Referenzuhr (CM) darstellt, wobei die Vorrichtung

- im Netzknoten (S1) enthalten ist und einen Regler (PI) umfasst, und
- zu einer Ermittlung eines geregelten Taktzählzustands (CT) mithilfe des Reglers (PI) eingerichtet ist, wobei der geregelte Taktzählzustand (CT) eine Schätzung des Referenzuhr-Taktzählzustands (CMT) darstellt und einen stetigen Verlauf aufweist,

**dadurch gekennzeichnet, dass**

- der Regler ein PI-Regler ist.

2. Vorrichtung nach Anspruch 1,

- bei dem das Eingangssignal des Reglers (PI) eine Regelabweichung (D) zwischen dem geschätzten Referenzuhr-Taktzählzustand (RMT) und dem geregelten Taktzählzustand (CT) ist,
- bei dem die Stellgröße des Reglers ein Regelabweichung-Kompensationsfaktor (OCF) ist, welcher ein aktuelles Verhältnis einer Referenztaktfrequenz (fm) der Referenzuhr (CM) zu einer Knotentaktfrequenz (fs) der internen Uhr (C1) des Netzknotens (S1) schätzt, und
- bei dem die Vorrichtung zur Berechnung des geregelten Taktzählzustands (CT) eingerichtet ist, wobei der internen Uhr (C1, ..., CN) des mindestens einen Netzknotens (S1,..., SN) gefolgt wird und wobei deren Taktzählzustand mit dem Regelabweichung-Kompensationsfaktor (OCF) fortlaufend korrigiert wird.

3. Vorrichtung nach einem der vorangegangen Ansprüche,

- bei dem die Vorrichtung als Netzwerkkarte, insbesondere als Netzwerkkarte mit eigener Echtzeit-Uhr und Zeitstempel-Einheit, ausgebildet ist.

4. Verfahren zur Zeitsynchronisation in einem Kommunikationsnetz, wobei das Kommunikationsnetz eine Vielzahl von miteinander kommunizierenden Netzknoten (S1,..., SN) umfasst, welche jeweils eine interne Uhr (C1, ..., CN) beinhalten, und wobei die Zeitsynchronisation der internen Uhren (C1, ..., CN) der Netzknoten (S1, ..., SN) mittels einer Referenzuhr (CM) eines Referenzknotens (M) erfolgt,

- bei dem mindestens ein Netzknoten (S1) einen geschätzten Referenzuhr-Taktzählzustand (RMT) ermittelt, welcher eine Schätzung eines Referenzuhr-Taktzählzustands (CMT) der Referenzuhr (CM) darstellt,
- wobei zumindest der eine Netzknoten (S1) mithilfe eines Reglers (PI) einen geregelten Taktzählzustand (CT) ermittelt, welcher eine Schätzung des Referenzuhr-Taktzählzustands (CMT) darstellt und einen stetigen Verlauf aufweist,

**dadurch gekennzeichnet, dass**
der Regler einen PI-Regler umfasst.

5. Verfahren nach Anspruch 4,

- bei dem jeder Netzknoten (S1, ..., SN) einen geschätzten Referenzuhr-Taktzählzustand (RMT) ermittelt, welcher eine Schätzung des Referenzuhr-Taktzählzustands (CMT) darstellt, und
- bei dem jeder Netzknoten (S1, ..., SN) mithilfe eines Reglers (PI) fortlaufend einen geregelten Taktzählzustand (CT) ermittelt, welcher eine Schätzung des Referenzuhr-Taktzählzustands (CMT) darstellt und einen stetigen Verlauf aufweist.

6. Verfahren nach Anspruch 4 oder 5,

- bei dem die Zeitsynchronisation nach dem Standard IEC 61158 Type 10, genannt PROFINET, und/oder dem Precision Transparent Clock Protocol gemäß dem Standard IEC 61158 Type 10 PTCP erfolgt, wobei der Referenzknoten (M) als Master und die Netzknoten (S1, ..., SN) als Slaves gemäß den jeweiligen Standards verwendet werden, und wobei das Kommunikationsnetz ein Multicast-Netzwerk, insbesondere ein Ethernet, ist.

7. Verfahren nach einem der Ansprüche 4 bis 6, bei dem der Regler ein in Software implementierter Digitalregler ist.

8. Verfahren nach einem der Ansprüche 4 bis 7,

- bei dem dem Regler (PI) eine Regelabweichung (D) zwischen dem geschätzten Referenzuhr-Taktzählzustand (RMT) und dem geregelten Taktzählzustand (CT) zugeführt wird,

- bei dem der Regler (PI) als Stellgröße einen Regelabweichung-Kompensationsfaktor (OCF) errechnet, welcher ein aktuelles Verhältnis einer Referenztaktfrequenz (fm) der Referenzuhr (CM) zu einer Knotentaktfrequenz (fs) der internen Uhr (C1) des Netzknotens (S1) schätzt, und
- bei dem der geregelte Taktzählzustand (CT) berechnet wird, indem der internen Uhr (C1, ..., CN) des mindestens einen Netzknotens (S1,..., SN) gefolgt wird und wobei deren Taktzählzustand mit dem Regelabweichung-Kompensationsfaktor (OCF) fortlaufend korrigiert wird.

**9.** Netzknoten (S1,..., SN), welcher die Vorrichtung nach einem der Ansprüche 1 bis 3 beinhaltet und/oder das Verfahren nach einem der Ansprüche 4 bis 8 ausführt.

**10.** Computerlesbarer Datenträger,

- auf dem ein Computerprogramm gespeichert ist, welches das Verfahren nach einem der Ansprüche 4 bis 8 ausführt, wenn es in einem Mikroprozessor abgearbeitet wird.

**11.** Computerprogramm,

- welches in einem Mikroprozessor abgearbeitet wird und dabei das Verfahren nach einem der Ansprüche 4 bis 8 ausführt.

**Claims**

**1.** Device for time synchronisation in a communication network, wherein the communication network comprises a plurality of network nodes (S1, ..., SN) communicating with one another, which in each case contain an internal clock (C1, ..., CN), wherein the network nodes (S1, ..., SN) are set up for time synchronisation of their internal clocks (C1, ..., CN) by means of a reference clock (CM) of a reference node (M), and wherein at least one network node (S1) is set up for determining an estimated reference clock-pulse counter status (RMT), which represents an estimation of a reference clock-pulse counter status (CMT) of the reference clock (CM), wherein the device

- is contained in network nodes (S1) and comprises a controller (PI), and
- is set up to determine a controlled pulse counter status (CT) by means of the controller (PI), wherein the controlled pulse counter status (CT) represents an estimation of the reference clock-pulse counter status (CMT) and has a continuous path,

**characterised in that**

- the controller is a PI controller.

**2.** Device according to claim 1,

- in which the input signal of the controller (PI) is a control deviation (D) between the estimated reference clock-pulse counter status (RMT) and the controlled pulse counter status (CT),
- in which the manipulated variable of the controller is a control deviation compensation factor (OCF), which estimates a current ratio of a reference clock frequency (fm) of the reference clock (CM) to a node clock frequency (fs) of the internal clock (C1) of the network node (S1), and
- in which the device for calculating the controlled pulse counter status (CT) is set up, wherein the internal clock (C1, ..., CN) of the at least one network node (S1, ..., SN) is followed and wherein the pulse counter status thereof is continuously corrected by the control deviation compensation factor (OCF).

**3.** Device according to one of the preceding claims,

- in which the device is embodied as a network card, in particular as a network card with a separate real-time clock and time stamp unit.

**4.** Method for time synchronisation in a communication network, wherein the communication network comprises a plurality of network nodes (S1, ..., SN) communicating with one another, which in each case contain an internal clock (C1, ..., CN), and wherein the time synchronisation of the internal clocks (C1, ..., CN) of the network nodes (S1, ..., SN) takes place by means of a reference clock (CM) of a reference node (M),

- in which at least one network node (S1) determines an estimated reference clock-pulse counter status (RMT), which represents an estimation of a reference clock-pulse counter status (CMT) of the reference clock (CM),
- wherein at least the one network node (S1) determines, by means of a controller (PI), a controlled pulse counter status (CT) which represents an estimation of the reference clock-pulse counter status (CMT) and has a continuous path,

**characterised in that**
the controller is a PI controller.

5. Method according to claim 4,

- in which each network node (S1, ..., SN) determines an estimated reference clock-pulse counter status (RMT), which represents an estimation of the reference clock-pulse counter status (CMT), and
- in which each network node (S1, ..., SN) by means of a controller (PI) continuously determines a controlled pulse counter status (CT) which represents an estimation of the reference clock-pulse counter status (CMT) and has a continuous path.

6. Method according to claim 4 or 5,

- in which the time synchronisation takes place according to Standard IEC 61158 Type 10, known as PROFINET, and/or the Precision Transparent Clock Protocol according to Standard IEC 61158 Type 10 PTCP, wherein the reference node (M) is used as the master and the network nodes (S1, ..., SN) are used as slaves according to the respective standards, and wherein the communication network is a multicast network, in particular an ethernet.

7. Method according to one of claims 4 to 6,
in which the controller is a digital controller implemented in software.

8. Method according to one of claims 4 to 7,

- in which a control deviation (D) between the estimated reference clock-pulse counter status (RMT) and the controlled pulse counter status (CT) is supplied to the controller (PI),
- in which the controller (PI) as a manipulated variable calculates a control deviation compensation factor (OCF) which estimates a current ratio of a reference clock frequency (fm) of the reference clock (CM) to a node clock frequency (fs) of the internal clock (C1) of the network node (S1), and
- in which the controlled pulse counter status (CT) is calculated, by the internal clock (C1, ..., CN) of the at least one network node (S1, ..., SN) being followed and wherein the pulse counter status is continuously corrected by the control deviation compensation factor (OCF).

9. Network node (S1, ..., SN) which contains the device according to one of claims 1 to 3, and/or implements the method according to one of claims 4 to 8.

10. Computer-readable data carrier,

- on which a computer program is stored which implements the method according to one of claims 4 to 8, when it is processed in a microprocessor.

11. Computer program,

- which is processed in a microprocessor and at the same time implements the method according to one of claims 4 to 8.

**Revendications**

1. Dispositif de synchronisation temporelle dans un réseau de communication, le réseau de communication comprenant une pluralité de noeuds de réseau (S1,..., SN) communiquant les uns avec les autres, qui contiennent respectivement une horloge interne (C1,..., CN), les noeuds de réseau (S1,..., SN) étant prévus pour une synchronisation temporelle de leurs horloges internes (C1,..., CN) au moyen d'une horloge de référence (CM) d'un noeud de référence (M), et au moins un noeud de réseau (S1) étant prévu pour la détection d'un état estimé de comptabilisation des impulsions de l'horloge de référence (RMT), lequel représente l'estimation d'un état de comptabilisation des impulsions (CMT) d'horloge de référence de l'horloge de référence (CM), le dispositif étant

- contenu dans le noeud de réseau (S1) et comprenant un régulateur (PI), et
- étant prévu pour la détection d'un état de comptabilisation d'impulsion (CT) réglé à l'aide du régulateur (PI), l'état réglé de comptabilisation des impulsions (CT) représentant une estimation de l'état de comptabilisation des impulsions (CMT) d'horloge de référence et présentant une marche stable,

**caractérisé en ce que**
le régulateur est un régulateur PI.

2. Dispositif selon la revendication 1,

- dans lequel le signal d'entrée du régulateur (PI) est une dérivation du réglage (D) entre l'état estimé de comptabilisation des impulsions (RMT) d'horloge de référence et l'état réglé de comptabilisation des impulsions (CT),

dans lequel la grandeur réglante du régulateur est un facteur de compensation de la dérivation de réglage (OCF), lequel estime un comportement actualisé de la fréquence des impulsions de référence (fm) de l'horloge de référence (CM) par rapport à une fréquence des impulsions de noeud (fs) de l'horloge interne (C1) du noeud de réseau (S1), et

- dans lequel le dispositif est prévu pour le calcul de l'état réglé de comptabilisation des impulsions (CT), l'horloge interne (C1,..., CN) du au moins un noeud de réseau (SN) étant suivie et dont l'état de comptabilisation des impulsions est corrigé en permanence avec le facteur de compensation de la dérivation de réglage (OCF).

3. Dispositif selon l'une des revendications précédentes,

- dans lequel le dispositif est réalisé sous forme de carte de réseau, en particulier comme carte de réseau avec horloge en temps réel et unité d'horodatage.

4. Procédé de synchronisation temporelle dans un réseau de communication, le réseau de communication comprenant une pluralité de noeuds de réseau (S1,..., SN) communiquant les uns avec les autres, qui contiennent respectivement une horloge interne (C1,..., CN) et la synchronisation temporelle des horloges internes (C1,..., CN) des noeuds de réseau (S1,..., SN) s'effectuant au moyen de l'horloge de référence (CM) d'un noeud de référence (M),

- dans lequel au moins un noeud de réseau (S1) détectant un état estimé de comptabilisation des impulsions (RMT) de l'horloge de référence, qui représente l'estimation d'un état de comptabilisation des impulsions d'horloge de référence (CMT) de l'horloge de référence (CM),
- le au moins un noeud de réseau (S1) détectant, à l'aide d'un régulateur (PI), un état réglé de comptabilisation des impulsions (CT), lequel représente l'estimation de l'état de comptabilisation des impulsions d'horloge de référence (CMT) et présentant une marche stable,

**caractérisé en ce que**
le régulateur comprend un régulateur PI.

5. Procédé selon la revendication 4,

- dans lequel chaque noeud de réseau (S1,..., SN) détecte un état estimé de comptabilisation des impulsions (RMT) d'horloge de référence, qui représente l'estimation d'un état de comptabilisation des impulsions (CMT) d'horloge de référence, et
- dans lequel chaque noeud de réseau (S1,..., SN) détecte, à l'aide d'un régulateur (PI) en permanence un état réglé de comptabilisation des impulsions (CT), lequel représente une estimation de l'état de comptabilisation des impulsions (CMT) d'horloge de référence et présente une marche stable.

**6.** Procédé selon la revendication 4 ou 5,
dans lequel la synchronisation temporelle s'effectue selon la norme IEC 61158 Type 10, appelée PROFINET, et/ou selon le protocole Precision Transparent Clock Protocol selon la norme IEC 61158 Type 10 PTCP, le noeud de référence (M) étant utilisé comme maître et le noeud de référence (S1,..., SN), comme esclaves, selon les normes respectives, et le réseau de communication étant un réseau multidiffusion, en particulier un Éthernet.

**7.** Procédé selon l'une des revendications 4 à 6,

- dans lequel le régulateur est un régulateur numérique mis en oeuvre en logiciel.

**8.** Procédé selon l'une des revendications 4 à 7,

- dans lequel une dérivation de réglage (D) entre l'état estimé de comptabilisation des impulsions (RMT) d'horloge de référence et l'état réglé de comptabilisation des impulsions (CT) est envoyée au régulateur (PI),
- dans lequel le régulateur (PI) calcule comme grandeur réglante un facteur de compensation de dérivation de réglage (OCF), lequel estime le comportement actualisé d'une fréquence d'impulsions de référence (fm) de l'horloge de référence (CM) par rapport à une fréquence d'impulsions de noeud (fs) de l'horloge interne (C1) du noeud de réseau (S1), et
- dans lequel l'état de comptabilisation des impulsions (CT) est calculé, en ce que l'horloge interne (C1,..., CN) du au moins un noeud de réseau (S1,..., SN) est suivie, et dont l'état de comptabilisation des impulsions est corrigé en permanence avec le facteur de compensation de la dérivation du réglage (OCF).

**9.** Noeud de réseau (S1,..., SN), qui contient le dispositif selon l'une des revendications 1 à 3 et/ou exécute le procédé selon l'une des revendications 4 à 8.

**10.** Support de données pouvant être lu par un ordinateur,

- sur lequel un programme informatique est stocké, lequel exécute le procédé selon l'une des revendications 4 à 8, lorsqu'il est pris en charge dans un microprocesseur.

**11.** Programme informatique,

- pris en charge dans un microprocesseur et qui exécute de ce fait le procédé selon l'une des revendications 4 à 8.

# FIG 1

M

S1

SN

SM

SM

CM
fm

C1
fs

CN
fs

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2034642 A1

- US 2003177154 A1

**In der Beschreibung aufgeführte Nicht-Patentliteratur**

- **R. LUPAS SCHEITERER ; C. NA ; D. OBRADOVIC ; G. STEINDL.** Synchronization Performance of the Precision Time Protocol in Industrial Automation Networks. *ISPCS07 Special Issue of the IEEE Transactions on Instrumentation and Measurement,* Juni 2009, vol. 58 (6), 1849-1857